# EUROPEAN PATENT APPLICATION

(11) **EP 3 113 338 A1**
(43) Date of publication of application: **04.01.2017**
(21) Application number: 16176557.3
(22) Date of filing: 28.06.2016
(51) Int. Cl.: H02K 15/00, H02K 3/51

(54) **DYNAMOELECTRIC MACHINE MAIN LEAD SERVICING**

(30) Priority: 29.06.2015 US 201514753377
(71) Applicant: General Electric Company, Schenectady, NY 12345 (US)
(72) Inventor: WORD, Jacob Wade, Greenville, South Carolina 29615 (US); MOLDENHAUER, Thomas Earnest, Schenectady, New York 12345 (US); VADNEY, Robert William, Schenectady, New York 12345 (US)
(74) Representative: Fischer, Jens Peter

(57) **Abstract**

Various embodiments include approaches for servicing a dynamoelectric machine main lead (8). Some embodiments include a method of servicing a main lead (8) in a dynamoelectric machine rotor (1) having a collector end retaining ring (4) retaining the main lead (8), a terminal stud (9) contacting the main lead (8), a winding contacting the main lead (8), and main terminal insulation (12A) proximate the main lead (8), the method including: removing the collector end retaining ring (4) to expose the main lead (8); disconnecting the main lead (8) from each of the winding and the terminal stud (9), during the disconnecting of the main lead (8) from the terminal stud (9), cooling the main terminal insulation (12A) proximate the main lead (8); connecting a replacement main lead (8) to each of the winding and the terminal stud (9); and during the connecting of the replacement main lead (8) to the terminal stud (9), cooling the main terminal insulation (12A) proximate the main lead (8).

## Description

The subject matter disclosed herein relates to dynamoelectric machines. More particularly, the subject matter disclosed herein relates to apparatuses and approaches for repairing/servicing main leads in dynamoelectric machines.

Dynamoelectric machine (e.g., generator) rotors are commonly called "fields," and have an electrical connection known as the main lead, which completes the electrical connection between the machine's collector rings and the field winding. On some generator fields, for example, mid-sized generator fields, the main lead (connection) includes a flexible connector composed of numerous thin copper leaves. During operation, these leaves can be damaged, e.g., by fracture, breakage, and/or spreading. This damage can decrease the load carrying capacity of the connector and/or ground the field winding against the field forging, calling for repair.

Conventionally, repairing the connector involves disassembling the innermost (No. 1) coil winding, which provides access to the terminal stud in the field winding. In order to access and remove the innermost coil winding, its retaining rings must also be removed. Following removal of the innermost coil winding, the terminal stud (and related assembly) is replaced. This conventional process requires a significant labor force to remove/reinstall the retaining rings, disassemble/assemble the coil winding (including removing insulation and re-insulating), and replace the terminal stud. For example, in some generators, this process can take between four (4) and five (5) working days. Additionally, this conventional process involves purchasing various new parts, including insulation, terminal studs, etc. Further, removing the innermost coil winding may cause damage to ancillary components (e.g., slot armor), incurring additional cost.

Various embodiments of the disclosure include approaches for servicing a main lead in a dynamoelectric machine. Some embodiments include a method of servicing a main lead in a dynamoelectric machine rotor having a collector end retaining ring retaining the main lead, a terminal stud contacting the main lead, a winding contacting the main lead, and main terminal insulation proximate the main lead, the method including: removing the collector end retaining ring to expose the main lead; disconnecting the main lead from each of the winding and the terminal stud, during the disconnecting of the main lead from the terminal stud, cooling the main terminal insulation proximate the main lead; connecting a replacement main lead to each of the winding and the terminal stud; and during the connecting of the replacement main lead to the terminal stud, cooling the main terminal insulation proximate the main lead.

A first aspect of the invention includes a method of servicing a main lead in a dynamoelectric machine rotor having a collector end retaining ring retaining the main lead, a terminal stud contacting the main lead, a winding contacting the main lead, and main terminal insulation proximate the main lead, the method including: removing the collector end retaining ring to expose the main lead; disconnecting the main lead from each of the winding and the terminal stud, during the disconnecting of the main lead from the terminal stud, cooling the main terminal insulation proximate the main lead; connecting a replacement main lead to each of the winding and the terminal stud; and during the connecting of the replacement main lead to the terminal stud, cooling the main terminal insulation proximate the main lead.

A second aspect of the invention includes a method of servicing a main lead in a dynamoelectric machine rotor having a collector end retaining ring retaining the main lead, a terminal stud contacting the main lead, a winding contacting the main lead, and main terminal insulation proximate the main lead, the method including: removing the collector end retaining ring to expose the main lead; disconnecting the main lead from each of the winding and the terminal stud by at least one of cutting or un-brazing the main lead from each of the winding and the terminal stud; during the disconnecting of the main lead from the terminal stud, cooling the main terminal insulation proximate the main lead; connecting a replacement main lead or a refurbished main lead to each of the winding and the terminal stud; and during the connecting of the replacement main lead to the terminal stud, cooling the main terminal insulation proximate the main lead.

A third aspect of the invention includes a method of servicing a main lead in a dynamoelectric machine rotor having a collector end retaining ring retaining the main lead, a terminal stud contacting the main lead, a winding contacting the main lead, and main terminal insulation proximate the main lead, the method including: removing the collector end retaining ring to expose the main lead; un-brazing the main lead from each of the winding and the terminal stud; cooling the main terminal insulation proximate the main lead to control a temperature of the main terminal insulation before, during and after the un-brazing of the main lead from the terminal stud; brazing a connection between a replacement main lead or a refurbished main lead to each of the winding and the terminal stud; and cooling the main terminal insulation proximate the main lead to control a temperature of the main terminal insulation before, during and after the brazing of the connection between the replacement main lead or the refurbished main lead to the terminal stud.

These and other features of this invention will be more readily understood from the following detailed description of the various aspects of the invention taken in conjunction with the accompanying drawings that depict various embodiments of the disclosure, in which:
FIG. 1 shows a disjointed three-dimensional perspective view of a dynamoelectric machine rotor according to the prior art.
FIG. 2 shows a partially transparent three-dimensional perspective view of the dynamoelectric machine rotor of FIG. 1, according to various embodiments of the disclosure.
FIG. 3 shows a flow diagram illustrating processes according to various embodiments of the disclosure.
FIG. 4 shows a three-dimensional perspective view of a portion of the dynamoelectric machine rotor of FIG. 2 undergoing processes according to various embodiments of the disclosure.
FIG. 5 shows a three-dimensional perspective view of a portion of the dynamoelectric machine rotor of FIGS. 2 and 4 undergoing processes according to various embodiments of the disclosure.
FIG. 6 shows a three-dimensional perspective view of a portion of the dynamoelectric machine rotor of FIGS. 2, 4 and 5 undergoing processes according to various embodiments of the disclosure.

It is noted that the drawings of the invention are not necessarily to scale. The drawings are intended to depict only typical aspects of the invention, and therefore should not be considered as limiting the scope of the invention. In the drawings, like numbering represents like elements between the drawings.

As indicated above, the subject matter disclosed herein relates to dynamoelectric machines. More particularly, the subject matter disclosed herein relates to apparatuses and approaches for repairing main leads in dynamoelectric machines.

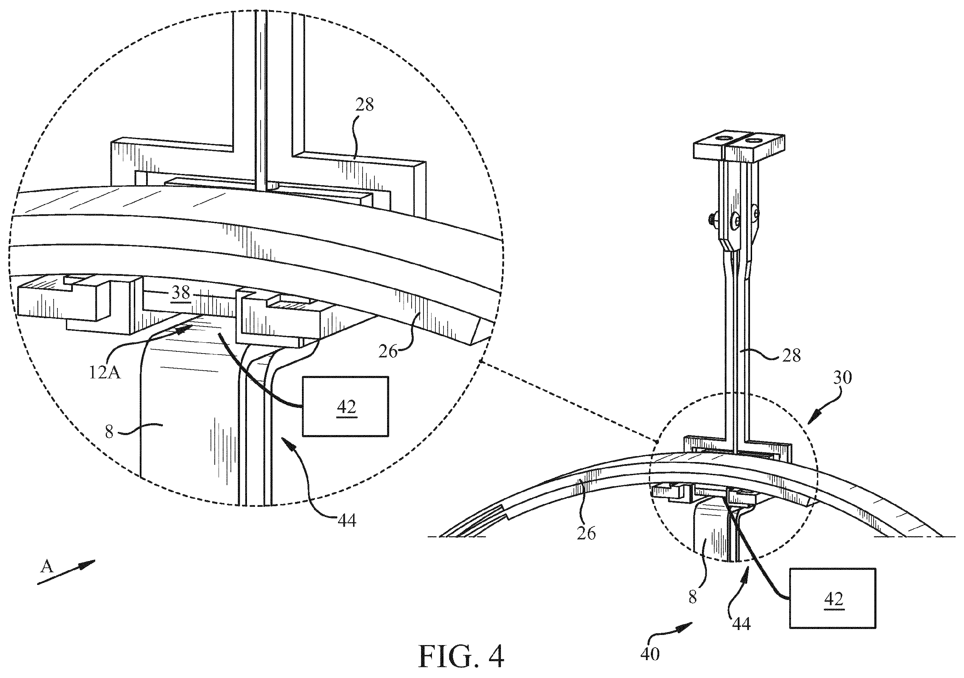

In the following description, reference is made to the accompanying drawings that form a part thereof, and in which is shown by way of illustration specific example embodiments in which the present teachings may be practiced. These embodiments are described in sufficient detail to enable those skilled in the art to practice the present teachings and it is to be understood that other embodiments may be utilized and that changes may be made without departing from the scope of the present teachings. The following description is, therefore, merely illustrative of various aspects of the invention. As used herein, the terms "axial" and/or "axially" refer to the relative position/direction of objects along axis A (FIG. 4), which is substantially parallel with the axis of rotation of the dynamoelectric machine (in particular, the rotor section).

In contrast to conventional approaches, various aspects of the disclosure include approaches for repairing the main lead (or, "connector," including flexible leaves) without removing the innermost coil winding in a dynamoelectric machine (generator). In particular, two major issues have prevented repairing the flexible leaves of the main lead, without removing the innermost coil winding (No. 1 coil). First, the available space for servicing is very limited, e.g., space between the winding and rotor body can be as small as, e.g., 2.5 inches (∼6.3 centimeters (cm)) axially, and 1.5 inches (∼3.75 cm) radially. Secondly, repairing the main lead requires un-brazing and re-brazing components proximate the insulation for the terminal stud. This insulation is sensitive to high temperatures, and in some cases, may be rated to withstand temperatures of no greater than approximately 200-250 degrees Celsius (C), despite brazing temperatures commonly reaching upwards of 700 degrees C. As described herein, various aspects of the disclosure provide approaches for repairing the main lead of a generator while avoiding at least the two major issues noted herein with respect to prior approaches.

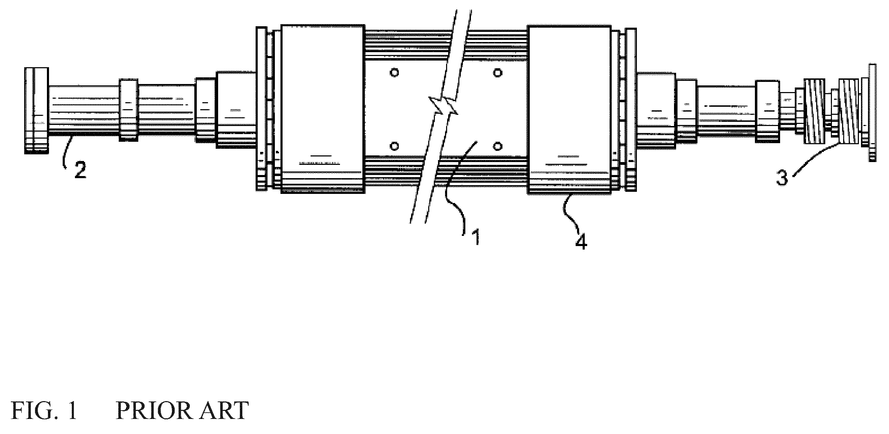

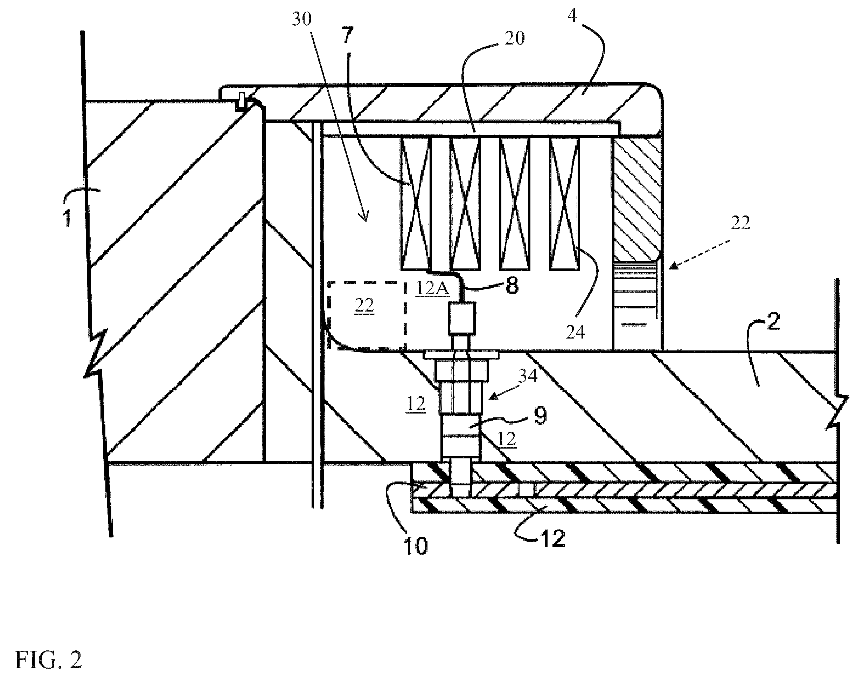

Referring to the drawings, particularly FIG. 1, there is illustrated a dynamoelectric machine rotor 1, such as a generator rotor, according to the prior art. The rotor 1 includes end shafts 2 one of which contain insulated conductors, i.e., bore connectors or "bore copper" that extend longitudinally along the end shafts 2 between the exciter/slip rings 3 and the rotor field windings located on the rotor within the retaining rings 4. As will be appreciated and is conventional, the rotor 1 includes a series of longitudinally extending, radially-opening slots, not shown, having dovetail-shaped, longitudinal grooves in the slot sides adjacent the periphery of the rotor 1. Field windings are inserted in the slots and extend the length of the rotor body with longitudinal wedges, not shown, located in the dovetail-shaped grooves for holding the windings in place against centrifugal forces exerted when the rotor 1 is at operational speed. The longitudinal sections of the windings extend in an axial direction beyond the ends of the larger diameter portion of the rotor and include field windings (end turns) 7 (FIG. 2) for connecting a longitudinal section of one slot with a winding of another slot. The retaining ring 4 overlies these windings (end turns) 7 and resists the centrifugal forces on the winding end turns when the rotor 1 is at operational speed so as to restrain the end turns from moving in a radially-outwardly direction.

Referring to FIG. 2, a terminal stud 9 extends between a bore copper 10 and the field windings 7. A flexible main lead (or, lead connector) 8 typically connects the radial outer end of the terminal stud 9 to an end turn 7. It will be appreciated that the bore copper 10 is electrically insulated from the rotor 2, for example, by insulation 12. Likewise, the terminal stud 9, while conducting electricity between the bore copper 10 and windings 7, is likewise electrically insulated from the rotor 1 in a conventional manner (insulation 12A). It will be appreciated that in the illustration of FIG. 2, the radial opening in the bore copper 10 which receives the lower or inner end of the terminal stud 9 is a tapered, threaded aperture which receives complementary threads on the end of the terminal stud.

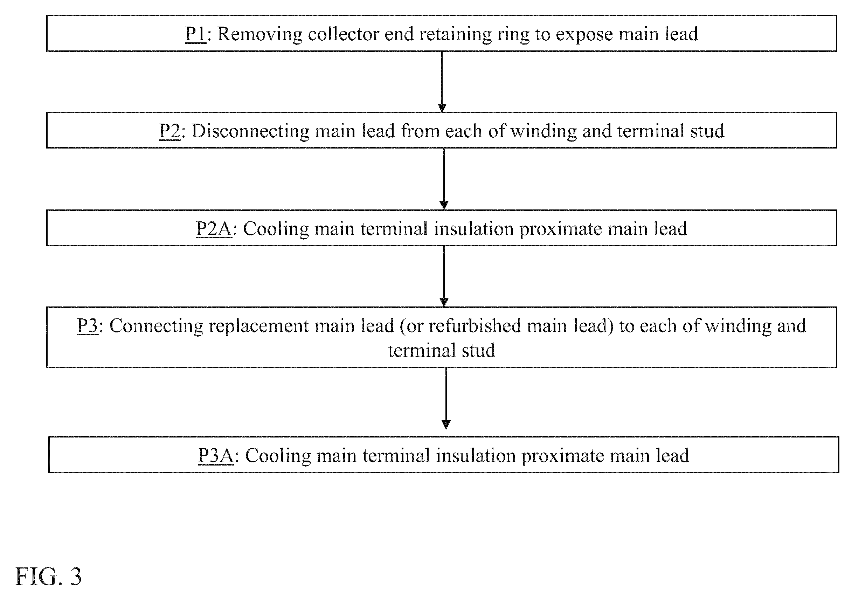

FIG. 3 shows a flow diagram illustrating processes in a method according to various embodiments. FIGS. 4-6 show three-dimensional schematic depictions of a portion of dynamoelectric machine rotor 1, undergoing processes according to the flow diagram in FIG. 3. As shown in FIGS. 1-2, the rotor 1 can include a collector end retaining ring (retaining ring) 4 retaining the main lead 8, terminal stud 9 contacting the main lead 8, and main terminal insulation (insulation 12) proximate the main lead 8. In various embodiments, a method is disclosed including the following processes:
Process P1: removing collector end retaining ring 4 (FIG. 1) to expose main lead 8. According to various embodiments, this process can also include removing the amortisseur winding 20 (along with retaining ring insulation) and blocking 22 (shown partially in phantom as removed) for an innermost coil winding 24. Removing can be performed by mechanically removing the collector end retaining ring 4 (as well as amortisseur winding 20 and blocking 22) using a conventional hand piece, pliers, clamp, etc.;
Process P2: disconnecting the main lead 8 from each of the winding 7 and the terminal stud 9. In disconnecting main lead 8 from the winding 7, the process can focus in particular on disconnecting the main lead 8 from a bottom turn 26 of the winding 7 (FIG. 4). In some particular cases, disconnecting the main lead 8 from the winding 7 can include applying a braze wand 28 to un-braze the connection between the winding 7 and the main lead 8. Braze wand 28 can include any conventional brazing device capable of applying induction heat to heat a braze joint. As shown in FIG. 4, the braze wand 28 can be sized to fit in the axial gap 30 behind the innermost coil winding 7 (bottom turn 26), and ultimately be located underneath the innermost coil winding 7 during the un-brazing process. The braze wand 28 includes concentrators directing the induction field on the bottom turn 26 of the innermost coil winding 7 (also known as the dead turn) on both sides of the main lead on winding 7. The design of the braze wand 28 allows for application of heat to only the solid copper dead turn 26, and not to the adjacent (and thinner) copper leaves 38, as the heat could damage those copper leaves. After un-brazing, the main lead 8 can be disconnected from the bottom turn 26 using any mechanical approach, e.g., a clamp, pliers, etc. According to various embodiments, during un-brazing of main lead 8 from winding 7 (Process P2), a wedge may be placed between the bottom turn 26 and its adjacent turn to physically separate those turns, and an insulator (e.g., a piece of mica or comparable material) can also be placed between the turns to prevent heat transfer damage to the adjacent turn. In some embodiments, the corner at the side of winding 7 can be wrapped in a damp insulator (e.g., liquid (e.g., water) soaked cloth) to prevent over-heating and un-brazing winding 7.

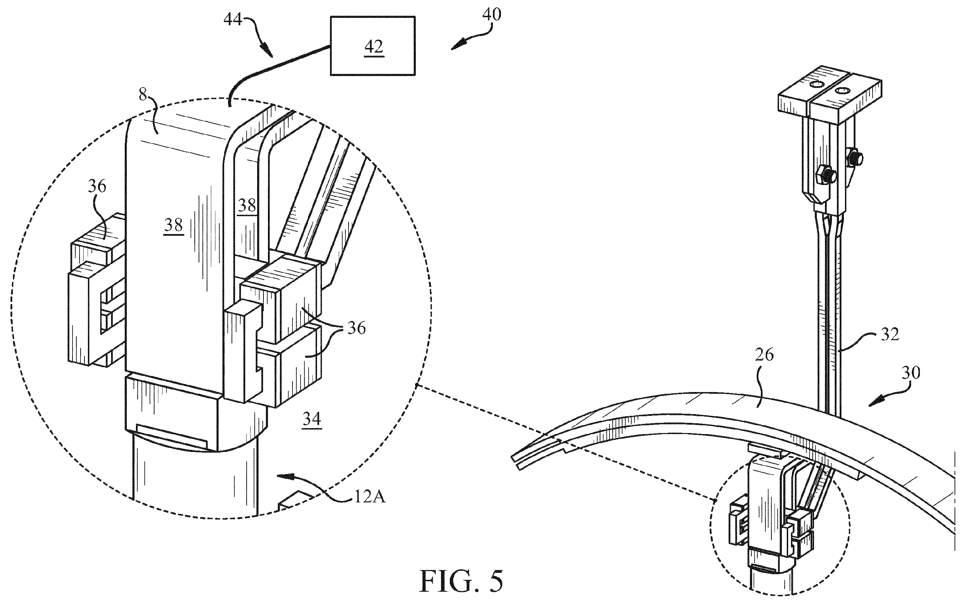

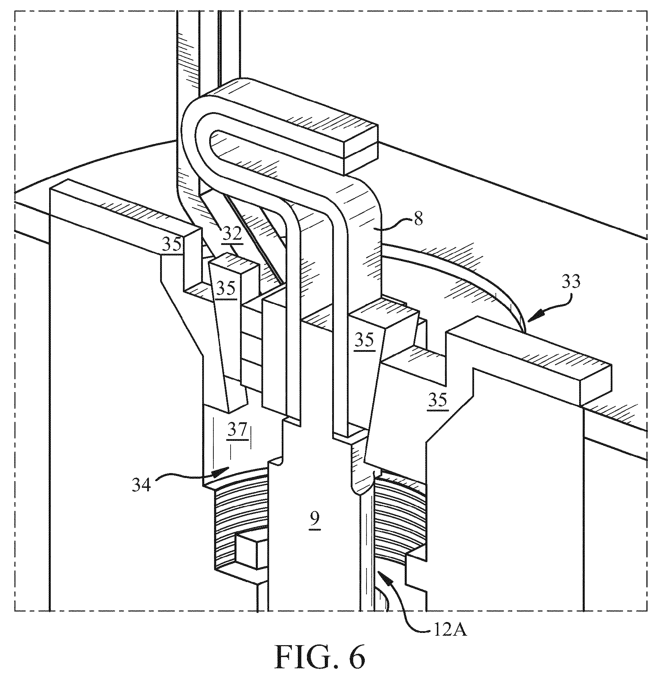

According to various embodiments, process P2 can further include disconnecting main lead 8 from terminal stud 9, and in particular embodiments, main lead 8 is disconnected from terminal stud 9 after disconnecting main lead 8 from winding 7. In some embodiments, this can include un-brazing the connection between the main lead 8 and the terminal stud 9. FIG. 5 shows a three-dimensional perspective view of an example induction wand 32, which may be used to perform the un-brazing operation in process P2. The induction wand 32 can be shaped to be inserted in the axial gap 30 behind the innermost coil winding 7, and positioned inside of the terminal stud bore 34 (shown perhaps more clearly in FIG. 6), with concentrators 36 focusing the induction field on the two exposed sides of the terminal stud 9. This configuration can apply heat directly to terminal stud 9, and not to the adjacent (and thinner) copper leaves 38 of main lead 8, as the heat could damage those copper leaves 38. After un-brazing, the flexible main lead 8 can be disconnected from terminal stud 9 using any mechanical approach, e.g., a clamp, pliers, etc. In various embodiments, as shown in FIG. 6, the induction wand 32 can be clamped proximate terminal stud 9, e.g., using a wedge-based clamping system 33. The wedge-based clamping system 33 can include at least one wedge member 35 (several shown) inserted in the terminal stud bore 34 and contacting at least one of a sidewall 37 of the bore 34 and induction wand 32, retaining the induction wand 32 against the joint between main lead 8 and terminal stud 9.

According to various other embodiments, the process of disconnecting the main lead 8 from winding 7 and/or disconnecting main lead 8 from terminal stud 9 can be performed by cutting main lead 8 from winding 7 and/or cutting the main lead 8 from the terminal stud 9 using a saw, e.g., a precision metal saw. It is understood that this process can be performed in conjunction with use of a braze wand 28 or induction wand 32 (as described herein), or may be performed as an alternative process. In some cases, regardless of the method used to disconnect main lead 8 from winding 7 and terminal stud 9, the process can include cleaning and preparing the joint surfaces proximate the joints between main lead 8 and winding 7 and terminal stud 9, respectively. This can include mechanically polishing, cleaning, etc., surfaces affected by the high-heat un-brazing process, for example, using scouring pads, steel wool, pencil grinders, etc. This process can also include removing any damaged insulation 12A proximate the un-brazed joint.

Process P2A: during process P2 (e.g., and in some cases, prior, during, and after disconnecting of main lead 8 from winding 7 and/or disconnecting main lead 8 from terminal stud 9) the method can include cooling main terminal insulation 12A proximate main lead 8 to prevent overheating of that insulation 12A. Main terminal insulation 12A is in place to prevent electrical creepage paths from developing between the forging or terminal nut and main lead 8, forcing grounding of the winding. Because this insulation cannot be replaced without removing the innermost coil winding 7 (and removing the main lead 8), various embodiments include methods for preventing damage to the main terminal insulation 12A. In various embodiments, cooling main terminal insulation 12A can include positioning a cooling apparatus 40 (FIGS. 4 and 5) proximate the main terminal insulation 12A, and initiating a flow of a cooling fluid toward main terminal insulation 12A. In various embodiments, the cooling apparatus 40 includes one of a liquid nitrogen apparatus configured to initiate flow of a liquid nitrogen cooling fluid, or a dry carbon-dioxide apparatus configured to initiate flow of a (dry) carbon-dioxide gas. In various embodiments, the cooling apparatus 40 includes a cooling fluid reservoir/generator 42, and a nozzle 44 fluidly connected with the reservoir/generator 42 for delivering the cooling fluid to main terminal insulation 12A when initiated. In some cases, nozzle 44 can have a helical shape including impinging apertures along its exterior (at the helical-shaped portion), for distributing the cooling fluid within the desired area of cooling proximate main terminal insulation 12A. As noted herein, in some cases, the nozzle is positioned proximate the main terminal insulation 12A prior to disconnecting main lead 8 from winding 7, and remains in position after the winding 7 has been disconnected from main lead 8.

Process P3: following removal of main lead 8 (process P2), a subsequent process can include connecting a replacement main lead 8 or a refurbished main lead 8 to each of the winding 7 and the terminal stud 9. The refurbished main lead 8 can include the main lead which was disconnected in process P2 (e.g., main lead 8), while replacement main lead 8 is a distinct main lead than main lead 8 disconnected in process P2. It is understood that a replacement main lead may be preferable in cases where the original main lead is damaged beyond repair. In some cases, connecting a replacement main lead 8 or a refurbished main lead 8 to winding 7 and terminal stud 9 includes brazing a connection between the main lead 8 and the winding 7 and brazing a connection between the main lead 8 and the terminal stud 9. These brazing processes can be performed in a substantially similar manner as the un-brazing processes described with respect to process P2, that is, positioning braze wand 32 and subsequently brazing connection between main lead 8 and terminal stud 9, and positioning induction wand 28 and subsequently brazing connection between main lead 8 and winding 7. Further, as described with reference to process P2, during connecting of (replacement or refurbished) main lead 8, a wedge may be placed between the bottom turn 26 and its adjacent turn to physically separate those turns, and an insulator (e.g., a piece of mica or comparable material) can also be placed between the turns to prevent heat transfer damage to the adjacent turn. In some embodiments, the corner at the side of winding 7 can be wrapped in a damp insulator (e.g., liquid (e.g., water) soaked cloth) to prevent over-heating and un-brazing winding 7.

Process P3A: during process P3 (e.g., and in some cases, prior, during, and after) connecting of (replacement) main lead 8 or (refurbished) main lead 8 from the winding 7 and/or disconnecting main lead 8 from terminal stud 9) the method includes cooling the main terminal insulation 12 proximate the main lead 8 to prevent overheating of that insulation 12. This cooling process can be substantially similar to the process described with respect to Process P2A, e.g., using cooling apparatus 40.

As noted herein, according to various embodiments, the disconnecting of main lead 8 and the connecting of the replacement main lead 8 (or refurbished main lead 8) are performed without removing innermost coil winding 26. These processes can reduce down time and mitigate damage to components in dynamoelectric machine 1.

It is understood that additional post-processing can include re-installing collector end retaining ring 4 (FIG. 1). According to various embodiments, this process can also include re-installing amortisseur winding 20 (along with retaining ring insulation) and blocking 22 for innermost coil winding 24. These processes can be performed similarly as described with respect to process P1.

It is understood that in the flow diagrams shown and described herein, other processes may be performed while not being shown, and the order of processes can be rearranged according to various embodiments. Additionally, intermediate processes may be performed between one or more described processes. The flow of processes shown and described herein is not to be construed as limiting of the various embodiments.

In any case, the technical effect of the various embodiments of the disclosure includes, e.g., repairing a dynamoelectric machine (e.g., generator) main lead.

When an element or layer is referred to as being "on", "engaged to", "connected to" or "coupled to" another element or layer, it may be directly on, engaged, connected or coupled to the other element or layer, or intervening elements or layers may be present. In contrast, when an element is referred to as being "directly on," "directly engaged to", "directly connected to" or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A method of servicing a main lead (8) in a dynamoelectric machine rotor (1) having a collector end retaining ring (4) retaining the main lead (8), a terminal stud (9) contacting the main lead (8), a winding (7) contacting the main lead (8), and main terminal insulation (12A) proximate the main lead (8), the method comprising:
removing the collector end retaining ring (4) to expose the main lead (8);
disconnecting the main lead (8) from each of the winding (7) and the terminal stud (9), during the disconnecting of the main lead (8) from the terminal stud (9), cooling the main terminal insulation (12A) proximate the main lead (8);
connecting a replacement main lead (8) to each of the winding (7) and the terminal stud (9); and
during the connecting of the replacement main lead (8) to the terminal stud (9), cooling the main terminal insulation (12A) proximate the main lead (8).

2. The method of claim 1, wherein the cooling of the main terminal insulation (12A) includes positioning a cooling apparatus (40) proximate the main terminal insulation (12A), and initiating a flow of a cooling fluid toward the main terminal insulation (12A).

3. The method of claim 2, wherein the cooling apparatus (40) includes one of a liquid nitrogen apparatus configured to initiate flow of a liquid nitrogen cooling fluid, or a dry carbon-dioxide apparatus configured to initiate flow of a carbon-dioxide gas.

4. The method of claim 1, wherein the dynamoelectric machine further includes an innermost coil winding (24) within the winding (7), and wherein the disconnecting of the main lead (8) and the connecting of the replacement main lead (8) are performed without removing the innermost coil winding (24).

5. The method of claim 4, wherein the dynamoelectric machine further includes an amortisseur winding (20) retained by the collector end retaining ring (4) and a blocking (22) retaining the innermost coil winding (24), the method further including removing the amortisseur winding (20) and the blocking (22) retaining the innermost coil winding (24) prior to the disconnecting of the main lead (8) from the winding (7) and the terminal stud (9).

6. The method of claim 1, wherein the disconnecting of the main lead (8) from the winding (7) and the terminal stud (9) includes un-brazing a braze connection between the main lead (8) and the winding (7) and un-brazing a braze connection between the main lead (8) and the terminal stud (9).

7. The method of claim 6, wherein the cooling of the main terminal insulation (12A) during the disconnecting of the main lead (8) is initiated prior to the disconnecting of the main lead (8), and is continued after the disconnecting of the main lead (8), to control a temperature of the main terminal insulation (12A).

8. The method of claim 1, wherein the connecting of the replacement main lead (8) to the winding (7) and the terminal stud (9) includes brazing a connection between the main lead (8) and the winding (7) and brazing a connection between the main lead (8) and the terminal stud (9).

9. A method of servicing a main lead (8) in a dynamoelectric machine rotor (1) having a collector end retaining ring (4) retaining the main lead (8), a terminal stud (9) contacting the main lead (8), a winding (7) contacting the main lead (8), and main terminal insulation (12A) proximate the main lead (8), the method comprising:
removing the collector end retaining ring (4) to expose the main lead (8);
disconnecting the main lead (8) from each of the winding (7) and the terminal stud (9) by at least one of cutting or un-brazing the main lead (8) from each of the winding (7) and the terminal stud (9);
during the disconnecting of the main lead (8) from the terminal stud (9), cooling the main terminal insulation (12A) proximate the main lead (8);
connecting a replacement main lead (8) or a refurbished main lead (8) to each of the winding (7) and the terminal stud (9); and
during the connecting of the replacement main lead (8) to the terminal stud (9), cooling the main terminal insulation (12A) proximate the main lead (8).

10. A method of servicing a main lead (8) in a dynamoelectric machine rotor (1) having a collector end retaining ring (4) retaining the main lead (8), a terminal stud (9) contacting the main lead (8), a winding (7) contacting the main lead (8), and main terminal insulation (12A) proximate the main lead (8), the method comprising:
removing the collector end retaining ring (4) to expose the main lead (8);
un-brazing the main lead (8) from each of the winding (7) and the terminal stud (9);
cooling the main terminal insulation (12A) proximate the main lead (8) to control a temperature of the main terminal insulation (12A) before, during and after the un-brazing of the main lead (8) from the terminal stud (9);
brazing a connection between a replacement main lead (8) or a refurbished main lead (8) to each of the winding (7) and the terminal stud (9); and
cooling the main terminal insulation (12A) proximate the main lead (8) to control a temperature of the main terminal insulation (12A) before, during and after the brazing of the connection between the replacement main lead (8) or the refurbished main lead (8) to the terminal stud (9).
